(19) Europäisches Patentamt
European Patent Office
Office européen des brevets

(11) Publication number: **0 251 706 A2**

(12) # EUROPEAN PATENT APPLICATION

(21) Application number: **87305665.9**

(22) Date of filing: **25.06.87**

(51) Int. Cl.[4]: **F23Q 2/00**, C08L 59/00

(30) Priority: **26.06.86 US 878919**

(43) Date of publication of application:
**07.01.88 Bulletin 88/01**

(84) Designated Contracting States:
**AT BE CH DE ES FR GB GR IT LI LU NL SE**

(71) Applicant: **CELANESE CORPORATION**
**1211 Avenue of the Americas**
**New York New York 10036(US)**

(72) Inventor: **Forschirm, Alex S.**
**21 Rockaway Place**
**Parsippany New Jersey(US)**
Inventor: **Davies Esq., Jon H.**
**45 Hilltop Terrace**
**Chatham New Jersey(US)**

(74) Representative: **De Minvielle-Devaux, Ian Benedict Peter et al**
**CARPMAELS & RANSFORD 43, Bloomsbury Square**
**London WC1A 2RA(GB)**

(54) **Improved polyacetal lighter body resin.**

(57) A process for forming a cigarette lighter body comprises injection molding an oxymethylene polymer composition which is devoid of a nucleating agent and which contains an oxymethylene polymer having a melt index of 27.0 g/10 min. The oxymethylene polymer composition is capable of being injection molded into cigarette lighter bodies of uniform base diameter.

**Fig.1**

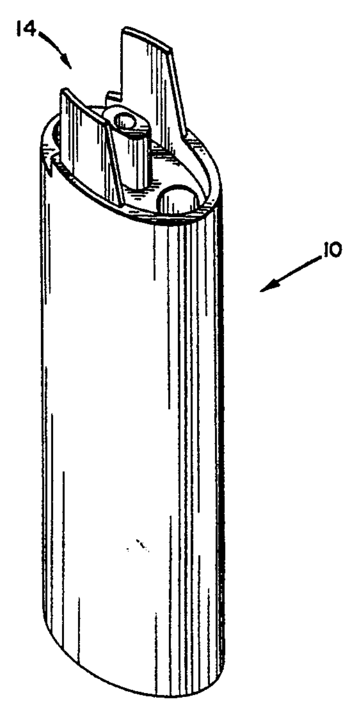


EP 0 251 706 A2

## IMPROVED POLYACETAL LIGHTER BODY RESIN BACKGROUND OF THE INVENTION

### Field of the Invention

This invention relates to processes of forming cigarette lighter bodies from polyacetal resins. In particular, the present invention is concerned with forming hollow cigarette lighter bodies by injection molding a polyoxymethylene composition of specified physical properties.

### Description of the Prior Art

Oxymethylene polymers having recurring-CH $_2$O-units, have been known for many years. These polymers may be prepared by the polymerization of anhydrous formaldehyde or by the polymerization of trioxane, which is a cyclic trimer of formaldehyde.

Oxymethylene polymers of exceptional toughness and high molecular weight may be prepared by polymerizing trioxane in the presence of a cationic catalyst such as boron fluoride-containing catalysts, including boron fluoride, itself and boron fluoride coordination complexes with organic compounds in which oxygen or sulfur is the donor atom.

The usefulness of oxymethylene polymers in molding compositions is well known. Oxymethylene polymers are distinguished by a number of excellent properties so they are suitable for a variety of industrial applications. One such application is in the formation of cigarette lighter bodies by the injection molding of oxymethylene polymer compositions. Cigarette lighter bodies are cylindrical containers of circular or elliptical cross-section which serve as the supply for the lighter fluid and as the support for the flame-forming mechanism.

Many of the desirable properties of oxymethylene polymers result from the fact that these polymers are highly crystalline. However, microscopic examination of thin sections of such polymers also shows that there is a non-homogeneous coarse spherulitic structure which when forming during solidification of a melt, produces different shrinkage values, distortions, and internal stresses, which lead to variations in the dimensions of molded articles manufactured therefrom. Accordingly, it is well known to incorporate nucleating agents into oxymethylene polymer compositions to control and render the crystallization of the oxymethylene polymer more uniform. Many nucleating agents are known in the art. U.S. Patent No. 3,775,363 which is just illustrative of such art discloses acicular calcium metasilicate as a nucleating agent for oxymethylene molding resin.

Another physical property of oxymethylene polymers which must be considered in the manufacture of molded articles is the ease of flow of such polymers. Thus, for some applications, it is desired to have polymers which flow readily at elevated temperatures while for other applications it is desired to have polymers which resist such flow. The melt index, which is related to molecular weight, provides an indication of the ease of flow of a polymer.

The melt index is determined by heating a sample of a polymer in a standard cylinder to a standard temperature of 190°C and forcing it under a standard load of 2.160 kg. through a standard orifice of 0.0825 inch diameter and 0.315 inch long for a standard period and weighing the polymer passing through the orifice during this period. The results are recorded in grams per 10 minutes. The test is described in detail in ASTM D-1238-57T.

The melt index (10X) is generally used when melt index values are low and is determined in an identical manner except that the standard load is increased 10 fold to 21.60 kg.

It can readily be seen that in forming molded articles from oxymethylene polymers, a particular combination of physical properties of the oxymethylene polymer must be chosen to meet the desired design specifications of the articles, whether to meet particular mechanical properties such as impact strength and the like and/or to provide dimensionally stable articles where avoiding variations in the dimensions of molded units is critical. Such is the case of forming cigarette lighter bodies from oxymethylene polymers. Typically, these cigarette lighter bodies are cylinders of circular or, more preferably, of elliptical cross section on the order of about 0.5 inch outer diameter and about 0.06 inch wall thickness. In mass producing such cigarette lighter bodies from oxymethylene polymers by injection molding, it is necessary that the oxymethylene polymer chosen have sufficient impact strength and continuously yield the desired base dimensions of the lighter body. Uniformity in the base diameter, for example, allows the proper fit for the flame producing mechanism.

It is thus a primary object of the present invention to provide an oxymethylene polymer having desired physical properties so as to be injection molded into cigarette lighter bodies which can meet strength requirements and critical dimension requirements. It is another object of the invention to

provide an oxymethylene polymer molding composition which can be injection molded into cigarette lighter bodies of uniform dimension so that such lighter bodies can be mass produced.

## SUMMARY OF THE INVENTION

It has now been discovered that the critical dimensional specifications of cigarette lighter bodies can be met by injection molding a non-nucleated polyacetal composition having a melt index of 27.0-40.0 g/10 minutes.

It is quite unexpected that a non-nucleated oxymethylene polymer can be injection molded into cigarette lighter bodies having uniform base dimensions inasmuch as the addition of nucleating agents to polyacetal resin compositions was thought necessary for yielding dimensionally stable articles molded therefrom. In accordance with the present invention non-nucleated oxymethylene polymers having a melt index of at least about 27.0 g/10 minutes can be molded into cigarette lighter bodies of cylindrical shape having circular or elliptical cross section which meet critical base diameter requirements for mass assembly.

## BRIEF DESCRIPTION OF THE DRAWINGS

Figure 1 is a perspective view of a typical cigarette lighter body formed by the process of the present invention.

Figure 2 is a bottom-end view of the cigarette lighter body of Figure 1.

## DETAILED DESCRIPTION OF THE INVENTION

The oxymethylene polymers used in molding the cigarette lighter bodies of the present invention are well known in the art. The polymers are characterized as having recurring oxymethylene groups or units, i.e., $-CH_2O-$. The term oxymethylene polymer as used herein is intended to include any oxymethylene polymer having $-CH_2O-$groups comprising at least about 50 percent of the recurring units, for example, homopolymer, copolymers, terpolymers and the like.

Typically, the homopolymers are prepared by the polymerization of anhydrous formaldehyde or by the polymerization of trioxane which is a cyclic trimer of formaldehyde. For example, high molecular weight polyoxymethylenes have been prepared by polymerizing trioxane in the presence of certain fluoride catalysts such as antimony fluoride and may also be prepared in high yields and at rapid reaction rates by the use of catalysts comprising boron fluoride coordinate complexes with organic compounds, as described in application Serial No. 691,143, filed October 21, 1957, by Hudgin and Berardinelli.

The homopolymers are usually stabilized against thermal degradation by end-capping or the incorporation therein of stabilizer compounds such as described in U.S. Patent No. 3,133,896 to Dolce and Berardinelli.

Oxymethylene polymers that are particularly adapted for use in the molding compositions of the present invention are oxymethylene copolymers, which may be prepared as described in U.S. Patent No. 3,027,352 of Walling et al by copolymerizing, for example, trioxane with any of various cyclic ethers having at least two adjacent carbon atoms, e.g., ethylene oxide, dioxolane, and the like.

Especially suitable oxymethylene copolymers which may be used in the molding compositions of the present invention usually possess a relatively high level of polymer crystallinity, i.e., about 70 to 80 percent. These preferred oxymethylene copolymers have repeating units which consist essentially of (a) $-OCH_2-$groups interspersed with (b) groups represented by the general formula:

$$\begin{array}{ccccccc} & & R_2 & & R_2 & & \\ -O & - & C & - & C & - & (R_3)_n \\ & & R_1 & & R_1 & & \end{array}$$

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and haloalkyl-substituted methylene, and lower alkyl and haloalkyl-substituted oxymethylene radicals, and n is an integer from zero to three inclusive.

Each lower alkyl radical preferably has from one to two carbon atoms, inclusive. The $-OCH_2-$ units of (a) constitute from about 85 to about 99.9 percent of the recurring units. The units of (b) may be incorporated into the copolymer during the step of copolymerization to produce the copolymer by the opening of the ring of a cyclic ether having adjacent carbon atoms, i.e., by the breaking of an oxygen-to-carbon linkage.

Copolymers of the desired structure may be prepared by polymerizing trioxane together with from about 0.1 to about 15 mole percent of a cyclic ether having at least two adjacent carbon atoms, preferably in the presence of a catalyst such as a Lewis acid (e.g, $BF_3$, $PF_5$, and the like) or other acids (e.g., $HC1O_4$, 1% $H_2SO_4$, and the like).

In general, the cyclic ethers employed in making the preferred oxymethylene copolymers are those represented by the general formula:

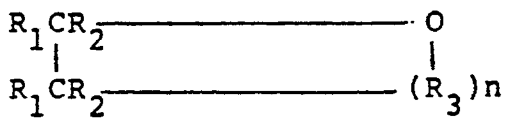

wherein each $R_1$ and $R_2$ is selected from the group consisting of hydrogen, lower alkyl and halogen-substituted lower alkyl radicals, and each $R_3$ is selected from the group consisting of methylene, oxymethylene, lower alkyl and haloalkyl-substituted methylene, and lower alkyl and haloalkyl-substituted oxymethylene radicals, and n is an integer from zero to three inclusive. Each lower alkyl radical preferably has from one to two carbon atoms, inclusive.

The preferred cyclic ethers used in the preparation of the preferred oxymethylene copolymers are ethylene oxide and 1,3-dioxolane, which may be represented by the formula:

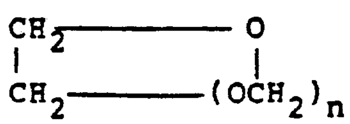

wherein n represents an integer from zero to two, inclusive. Other cyclic ethers that may be employed are 1,3-dioxane, trimethylene oxide, 1,2-propylene oxide, 1,2-butylene oxide, 1,3-butylene oxide and 2,2-di-(chloromethyl)-1,3-propylene oxide.

The preferred catalyst used in preparing the desired oxymethylene copolymers is the aforementioned boron trifluoride as discussed in the previously identified Walling et al patent. Reference is made to this patent for further information concerning the polymerization conditions, amount of catalyst employed, and the like.

The oxymethylene copolymers produced from the preferred cyclic ethers have a structure composed substantially of oxymethylene and oxyethylene groups in a ratio of from about 6 to 1 to about 1000 to 1.

The oxymethylene copolymers are preferably thermoplastic materials having a melting point of at least 150°C, and normally are millable or processable at a temperature of from about 180°C to about 200°C. They have a number average molecular weight of at least 10,000. The preferred oxymethylene copolymers have an inherent viscosity of at least 1.0 (measured at 60°C in a 0.1 weight percent solution in p-chlorophenol containing 2 weight percent of alphapinene).

The oxymethylene copolymer preferably is an oxymethylene copolymer that has been preliminarily stabilized to a substantial degree. Such stabilizing technique may take the form of stabilization by degradation of the molecular ends of the polymer chain to a point where a relatively stable carbon-to-carbon linkage exists at each end. For example, such degradation may be effected by hydrolysis as disclosed in U.S. Patent No. 3,219,623 to Berardinelli.

If desired, the oxymethylene copolymer may be endcapped by techniques known to those skilled in the art. A preferred end-capping technique is accomplished by acetylation with acetic anhydride in the presence of sodium acetate catalyst.

With respect to the oxymethylene terpolymer, it may be prepared, for example, by reacting trioxane and a cyclic ether and/or cyclic acetal such as in the preparation of the oxymethylene copolymer, with a third monomer which is a bifunctional compound such as a diglycide of the formula:

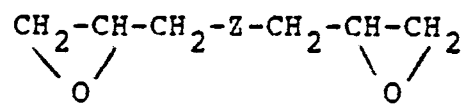

where z represents a carbon-to-carbon bond, an oxygen atom, an oxy-alkoxy of 1 to 8 carbon atoms, preferably 2 to 4 carbon atoms, and which may be an oxyclycloalkoxy of 4 to 8 carbon atoms, or an oxy-poly(lower alkoxy), preferably of 2 to 4 recurring groups each with 1 to 2 carbon atoms, for example, ethylene diglycide, diglycidyl ether and diethers of 2 mols of glycide and 1 mol of formaldehyde, dioxane or trioxane, or diethers of 2 mols of glycide and 1 mol of an aliphatic diol with 2 to 8 carbon atoms, advantageously 2 to 4 carbon atoms, or a cycloaliphatic diol with 4 to 8 carbon atoms.

Examples of suitable bifunctional compounds include the diglycidyl ethers of ethylene glycol, 1,4-butanediol, 1,3-butanediol, cyclobutane-1,3-diol, 1,2-propane-diol, cyclohexane-1, 4-diol and 2-dimethyl-4-dimethyl-cyclobutane-1,3-diol, with butanediol diglycidyl ethers being most preferred

Generally, in preparing the terpolymer of trioxane, cyclic ether and/or cyclic acetal and at least one bifunctional diglycide compound, a ratio of from 99.89 to 89.0 weight percent trioxane, 0.1 to 10 weight percent of the cyclic ether and/or cyclic acetal, and 0.01 to 1 weight percent of the bifunctional compound is preferred, with the percentage figures being based on the total weight of monomers used in forming the terpolymer. The terpolymers thus obtained are characterized as being essentially white and having a particularly good extrudability.

The polymerization of the terpolymer may be carried out according to known methods, that is in substance, solution or suspension, while using the above-mentioned quantitative proportions of the termonomers. As solvents, there may advantageously be used inert aliphatic or aromatic hydrocarbons, halogenated hydrocarbons or ethers.

In some cases, it may be advantageous to use the following quantitative proportions: 99.85 to 89.5 weight percent of trioxane, 0.1 to 10 weight percent of cyclic ether or cyclic acetal, and 0.05 to 0.5 weight percent of diglycidyl ether, the percentage figures being calculated on the total weight of the monomer mixture used for preparing the terpolymer.

The trioxane-based terpolymer polymerization is advantageously carried out at temperatures at which trioxane does not crystallize out, that is, at a temperature within the range of -50°C to +100°C, depending on the solvent used, and in the absence of a solvent at a temperature within the range of +20°C to +100°C.

As trioxane-based terpolymer polymerization catalyst, all substances may be used which are capable of initiating a cationic polymerization, for example, organic or inorganic acids, acid halides and, preferably, Lewis acids. Of the latter, boron fluoride and its complex compounds, for example, etherates of boron fluoride, are advantageously used. Diazonium fluoroborates are particularly advantageous.

The concentration of the catalyst may vary within the limits depending on the nature of the catalyst and on the intended molecular weight of the terpolymer. The concentration of the catalyst may be within the range of 0.0001 to 1 weight percent, calculated on the total monomer mixture, and is advantageously within the range of 0.001 to 0.1 weight percent.

Since the catalysts tend to decompose the terpolymer, the catalyst is advantageously neutralized immediately after the polymerization, for example, with ammonia or methanolic or acetonic amine solutions.

The unstable terminal hemiacetal groups may be removed from the terpolymer in the same manner as known for other oxymethylene polymers. Advantageously, the terpolymer is suspended in aqueous ammonia at temperature within the range of 100° to 200°C, and if desired, in the presence of a swelling agent such as methanol or n-propanol. Alternatively, the terpolymer is dissolved in an alkaline medium at temperatures above 100°C and subsequently reprecipitated. Examples of suitable solvents are benzyl alcohol, ethylene glycol monoethyl ether or a mixture of 60 weight percent methanol and 40 weight percent water. Examples of suitable compounds having an alkaline reaction are ammonia and aliphatic amines.

It is also possible to thermally stabilize the terminal groups of the terpolymers in the absence of a solvent in the melt in the presence of a stabilizer.

Alternatively, the terpolymer can be subjected to heterogeneous hydrolysis wherein water, with or without a catalyst, e.g., an aliphatic or aromatic amine, is added to a melt of the terpolymer in an amount ranging from about 1 to about 50 percent based on the weight of the terpolymer. The terpolymer mixture is maintained at a temperature in the range of from about 170° to 250°C for a specified period of time, and then washed with water and dried or centrifuged.

It is within the ambit of the present invention to use oxymethylene polymers that include, if desired, plasticizers, formaldehyde scavengers, mold lubricants, antioxidants, fillers, colorants, reinforcing agents, light stabilizers, pigments, other stabilizers, and the like, so long as such additives do not materially effect the desired properties including enhancement of impact strength of the resulting molding composition and the articles molded therefrom.

Suitable formaldehyde scavengers include cyanoguanidine, melamines, polyamides, amine-substituted triazines, amidines, ureas, hydroxyl salts of calcium, magnesium, and the like, salts of carboxylic acids, and metal oxides and hydroxides. Cyanoguanidine is the preferred formaldehyde scavenger. Suitable mold lubricants include alkylene bisstearamide, long-chain amides, waxes, oils, and polyether glycides. The preferred mold lubricant is commercially available from Glyco Chemical, Inc. under the designation Acrawax C and is alkylene bisstearamide. The preferred antioxidants are hindered bisphenols. Especially preferred is 1,6-hexamethylene bis-(3,5-di-t-butyl-4-hydroxyhydrocinnamate), commercially available from Ciba-Geigy Corp. under the designation Irganox 259.

Among the conventional additives not included in the oxymethylene polymer compositions considered useful in the manufacture of cigarette lighter bodies in accordance with the present invention is a nucleating agent. Nucleating agents are typically added to provide uniform crystallization of oxymethylene polymers. In accordance with this invention, nucleating agents, whether inorganic or organic, are not included in the oxymethylene polymer molding composition.

If the crystallization rate of the oxymethylene polymer must be improved, in some instances, the addition of nucleating agents may be tolerated, albeit in amounts far less than what is considered conventional in the art. Thus, in those instances in which a nucleant must be added to improve crystallinity and/or the physical properties of the molded article, the addition of nucleating agents in amount of up to about 0.4 wt.% may be tolerated and still yield oxymethylene polymer compositions which when injection molded into cigarette lighter bodies will meet the critical dimensional requirements.

It has been found that only those non-nucleated oxymethylene polymers which have a melt index of about 27.0 g/10 min. are able to be continuously injection molded into cigarette lighter bodies having the required dimensions. The melt index is related to the molecular weight of the polymer and is controlled by manipulating various operating parameters as is well known in the art. For example, oxymethylene polymers having the desired melt index are available commercially from Celanese Corporation under the designation Celcon$^R$. It is believed that oxymethylene polymers having a melt index above 27 g/10 min. are also useful in the invention and thus oxymethylene polymers having a melt index of up to about 40 g/10 min. may find use in the present invention.

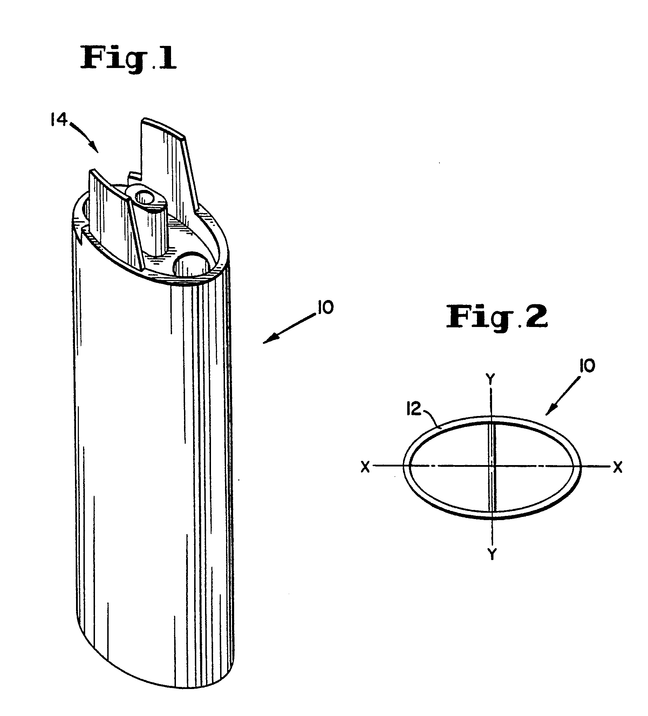

The cigarette lighter body which is formed from the non-nucleated oxymethylene polymer composition in accordance with the present invention is a hollow body of cylindrical shape having a circular, preferably, an elliptical cross section. Such a cigarette lighter body is depicted by reference numeral 10 in Figures 1 and 2. For those cigarette lighter bodies of elliptical cross section as shown in Figure 2, the outside diameter of the base along the elongated or X-axis will be on the order of one inch whereas the outside diameter along the shortened or Y-axis will be on the order of 0.5 to 0.75 inch. Thickness of wall 12 will range from about 0.05 to 0.07 inch. The length of the cigarette lighter body 10 is on the order of about 3 inches. The structure depicted by reference numeral 14 in Figure 1 is an integrally molded component of lighter body 10 and forms the support for the flame producing mechanism of the finished lighter.

In a typical molding operation, the cigarette lighter body can be moled on an Ingersoll-Rand 300 ton, 32 ounce reciprocating screw injection molding machine. The machine is equipped with a 24 cavity mold fed by an insulated runner system. In operation, the resin pellets are fed into the machine through a hopper leading to the metering section of the screw, and are then conveyed down the heated barrel by means of rotation of the screw. When the plasticized resin reaches the front of the screw, it is injected into the mold under high pressure by the screw acting as a ram. In the mold, the oxymethylene polymer crystallizes and partially cools. The molded articles are ejected from the mold and stored where further cooling and crystallization occur. Typical molding conditions are a 20-22 second cycle time, a melt temperature of 250°-450°F, a mold cavity temperature of 100°-250°F and an injection pressure of 5,000-25,000 psi.

EXAMPLE 1

Various nucleated and non-nucleated oxymethylene polymer compositions were prepared and injection molded into cigarette lighter bodies. Injection molding was done on an Ingersoll-Rand 300 ton, 32 ounce reciprocating screw injection molding machine. Molding conditions included a 20-22 second cycle time, a melt temperature of 380°F, a mold cavity temperature of 160°F and an injection pressure of 16,000 psi. The compositions were tested to determine what percent of 50 lighters formed from the individual compositions would have a base diameter of at least 0.487 inch, I.D. The particular formulations and the results are set forth in Table 1.

As can be seen from Table 1, the non-nucleated oxymethylene polymer composition, Melt Index = 27.0, (Sample F) yielded the most consistant product. Surprisingly, Sample A, the nucleated, M.I. = 27.0, oxymethylene composition was poor in achieving dimensional requirements as were non-nucleated oxymethylene compositions having a melt index below 27.0.

TABLE 1

Lighter Formulations, wt.%

| Ingredient | A | B | C | D | E | F | G | H | I | J | K | L | M |
|---|---|---|---|---|---|---|---|---|---|---|---|---|---|
| Celcon M90[1] | | | | 99.4 | 98.6 | | | | 94.1 | 95.8 | 95.8 | | |
| Celcon M140[2] | | 95.8 | 99.4 | | | | | 99.1 | | | | | |
| Celcon M270[3] | 95.8 | | | | | 99.4 | | | | | | | |
| Irganox 259 | .5 | .5 | .5 | .5 | .5 | .5 | .5 | .5 | .5 | .5 | .5 | | |
| Calcium Hydroxystearate | .1 | .1 | .1 | .1 | .1 | .1 | .1 | .1 | .1 | .1 | .1 | | |
| Arcrawax C | .3 | .3 | | | .3 | | .3 | .3 | .3 | .3 | .3 | | |
| Celcon U10-01[4] (nucleant) | 3.5 | 3.5 | | | .5 | | 99.1 | | .5 | 3.5 | 3.5 | | |
| Pigmented Delrin[5] | | | | | | | | | | | | 100 | |
| Natural Delrin[5] | | | | | | | | | | | | | 100 |
| % of 50 lighters tested having a base diameter of at least 0.487 in. | 18 | 0 | 17 | 48 | 0 | 78 | 59 | 0 | 0 | 4 | 4 | 66 | 42 |

1. oxymethylene copolymer; M.I. = 9.0
2. oxymethylene copolymer; M.I. = 14.0
3. oxymethylene copolymer; M.I. = 27.0
4. branched oxymethylene terpolymer
5. Dupont formaldehyde homopolymer; M.I. = 14

## Claims

1. A process for forming a cigarette lighter body comprising; injection molding an oxymethylene polymer composition into a cigarette lighter body, said oxymethylene composition being free of a nucleating agent and containing an oxymethylene polymer having a melt index of at least 27.0 g/10 min.

2. The process of claim 1 wherein said oxymethylene polymer has a melt index of about 27.0 g/10 min.

3. The process of claim 2 wherein said oxymethylene polymer is selected from the group consisting of:

(i) oxymethylene homopolymer,

(ii) oxymethylene copolymer comprising about 85 to about 99.9 percent recurring $-OCH_2-$ groups interspersed with groups of the formula:

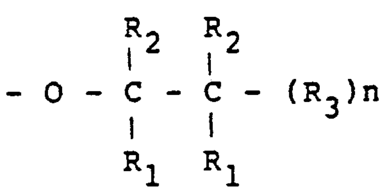

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and halo-alkyl-substituted methylene, and lower alkyl and haloalkyl-substituted oxymethylene radicals and n is an integer from 0 to 3, inclusive, each lower alkyl radical having from 1 to 2 carbon atoms, inclusive, said copolymer having a number average molecular weight of at least 10,000 and a melting point of at least 150°C, and

(iii) oxymethylene terpolymer, which is the reaction product of trioxane, a cyclic ether and/or cyclic acetal, and a diglycide of the formula:

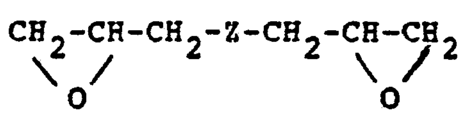

wherein z is selected from the group consisting of a carbon-to-carbon bond, oxygen, an oxyalkoxy of 1 to 8 carbon atoms, and an oxypoly (lower alkoxy).

4. The process of claim 3 wherein said oxymethylene polymer is said oxymethylene copolymer.

5. The process of claim 4 wherein said cigarette lighter body has an outside diameter of from 0.5 to 0.75 inch.

6. The process of claim 5 wherein said cigarette lighter body is of cylindrical shape having an elliptical cross section.

7. A process of forming a cigarette lighter body comprising; injection molding an oxymethylene polymer composition into a cigarette lighter body, said composition containing an oxymethylene polymer having a melt index of at least 27.0 g/10 min. and containing 0 to 0.4 wt.% of a nucleating agent.

8. The process of claim 7 wherein said oxymethylene polymer has a melt index of about 27.0 g/10 min.

9. The process of claim 7 wherein said oxymethylene polymer is selected from the group consisting of:

(i) oxymethylene homopolymer,

(ii) oxymethylene copolymer comprising about 85 to about 99.9 percent recurring $-OCH_2-$ groups interspersed with groups of the formula:

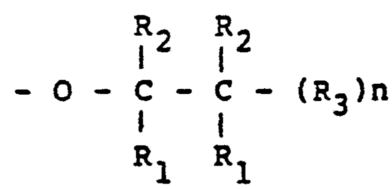

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and halo-alkyl-substituted methylene, and lower alkyl and haloalkyl-substituted oxymethylene radicals and n is an integer from 0 to 3, inclusive, each lower alkyl radical having from 1 to 2 carbon atoms, inclusive, said copolymer having a number average molecular weight of at least 10,000 and a melting point of at least 150°C, and

(iii) oxymethylene terpolymer, which is the reaction product of trioxane, a cyclic ether and/or cyclic acetal, and a diglycide of the formula:

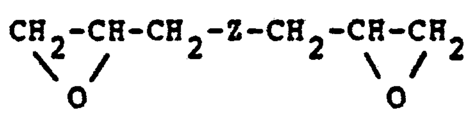

wherein Z is selected from the group consisting of a carbon-to-carbon bond, oxygen, an oxyalkoxy of 1 to 8 carbon atoms, and an oxypoly (lower alkoxy).

10. The process of claim 9 wherein said oxymethylene polymer is said oxymethylene copolymer.

11. The process of claim 10 wherein said cigarette lighter body has an outside diameter of from 0.5 to 0.75 inch.

12. The process of claim 11 wherein said cigarette lighter body is of cylindrical shape having an elliptical cross section.

13. A cigarette lighter body formed by the process of claim 7.

14. The cigarette lighter body of claim 13 wherein said oxymethylene polymer composition is free of a nucleating agent.

15. The cigarette lighter body of claim 13 wherein said oxymethylene polymer is selected from the group consisting of:

(i) oxymethylene homopolymer,

(ii) oxymethylene copolymer comprising about 85 to about 99.9 percent recurring $-OCH_2-$ groups interspersed with groups of the formula:

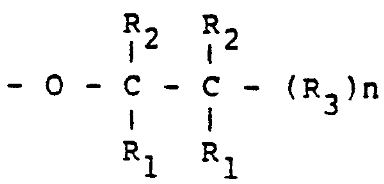

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and halo-alkyl-substituted methylene, and lower alkyl and haloalkyl-substituted oxymethylene radicals and n is an integer from 0 to 3, inclusive, each lower alkyl radical having from 1 to 2 carbon atoms, inclusive, said copolymer having a number average molecular weight of at least 10,000 and a melting point of at least 150°C, and

(iii) oxymethylene terpolymer, which is the reaction product of trioxane, a cyclic ether and/or cyclic acetal, and a diglycide of the formula:

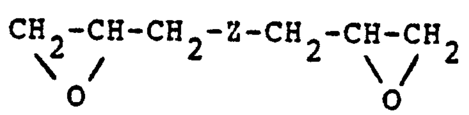

wherein Z is selected from the group consisting of a carbon-to-carbon bond, oxygen, an oxyalkoxy of 1 to 8 carbon atoms, and an oxypoly (lower alkoxy).

16. The cigarette lighter body of claim 15 wherein said oxymethylene polymer is said oxymethylene copolymer.

17. The cigarette lighter body of claim 13 wherein said cigarette lighter body has an outside diameter of from 0.5 to 0.75 inch.

18. The cigarette lighter body of claim 17 wherein said cigarette lighter body is of cylindrical shape having an elliptical cross section.

19. The cigarette lighter body of claim 13 wherein said oxymethylene polymer has a melt index of about 27.0 g/10 min.

20. The cigarette lighter body of claim 19 wherein said oxymethylene polymer composition is free of a nucleating agent.

Fig.1

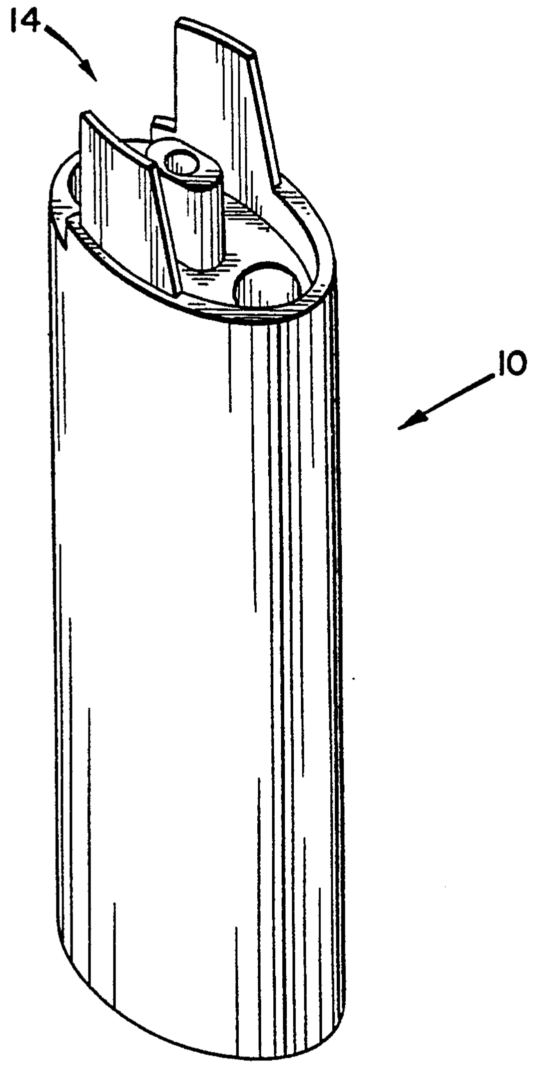


Fig.2